# EUROPÄISCHE PATENTSCHRIFT

(11) **EP 1 335 847 B1**
(45) Veröffentlichungstag und Bekanntmachung des Hinweises auf die Patenterteilung: **09.07.2008**
(21) Anmeldenummer: 01989454.2
(22) Anmeldetag: 09.11.2001
(51) Int. Cl.: B60T 8/88

(54) **VORRICHTUNG ZUR ANSTEUERUNG VON ELEKTROMAGNETISCH BETÄTIGBAREN VENTILEN IN EINER ELEKTROHYDRAULICHEN BREMSANLAGE**
DEVICE FOR CONTROLLING ELECTROMAGNETICALLY OPERATED VALVES IN AN ELECTROHYDRAULIC BRAKE SYSTEM
DISPOSITIF SERVANT A COMMANDER DES SOUPAPES A ACTIONNEMENT ELECTROMAGNETIQUE DANS UN SYSTEME DE FREINAGE ELECTRO-HYDRAULIQUE

(30) Priorität: 10.11.2000 DE 10055807; 02.11.2001 DE 10153849
(43) Veröffentlichungstag der Anmeldung: 20.08.2003
(73) Patentinhaber: Continental Teves AG & Co. oHG, 60488 Frankfurt am Main (DE)
(72) Erfinder: GIERS, Bernhard, 60320 Frankfurt/Main (DE); SCHMIDT, Robert, 56477 Rennerod (DE); STÖLZL, Stefan, 69469 Weinheim (DE); JUNGE, Ralf, 65760 Eschborn (DE)
(86) Internationale Anmeldenummer: PCT/EP2001/013008
(87) Internationale Veröffentlichungsnummer: WO 2002/038427

(56) Entgegenhaltungen:
- EP-A- 0 937 614
- EP-A- 0 937 623
- GB-A- 2 349 676

## Beschreibung

Die Erfindung betrifft eine Vorrichtung zur Ansteuerung von elektromagnetisch betätigbaren Ventilen einer elektrohydraulischen Bremsanlage für Kraftfahrzeuge, die in einer Betriebsart "Brake-by-wire" sowohl vom Fahrzeugführer als auch unabhängig vom Fahrzeugführer ansteuerbar ist und die in einer Rückfallbetriebsart betrieben werden kann, in der nur der Betrieb durch den Fahrzeugführer möglich ist, mit einer Einrichtung zur Erkennung des Fahrerverzögerungswunsches, einem mittels eines Bremspedals betätigbaren, mindestens einen Druckraum aufweisenden Notdruckgeber bzw. Hauptbremszylinder, dem ein druckloser Druckmittelvorratsbehälter zugeordnet ist,einer hydraulischen Hilfsdruckquelle, mit deren Druck Radbremsen beaufschlagbar sind, die über mittels elektromagnetisch betätigbarer Trennventile absperrbare hydraulische Verbindungen mit dem Hauptbremszylinder verbindbar sind, und denen elektromagnetisch betätigbare Druckregelventile (Einlaßventil; Auslaßventil) zugeordnet sind, die die Radbremsen in einer Druckaufbauphase mit der Druckquelle verbinden, in einer Druckhaltephase geschlossen sind bzw. geschlossen werden und in einer Druckabbauphase die Radbremsen mit dem Druckmittelvorratsbehälter verbinden, elektromagnetisch betätigbaren Druckausgleichsventilen, die einen Druckausgleich zwischen den Radbremsen einer Fahrzeugachse ermöglichen, sowie einer elektronischen Steuer- und Regeleinheit zur Ansteuerung der Hilfsdruckquelle, der Trennventile, der Druckregelventile sowie der Druckausgleichsventile, die mindestens eine Ventiltreiberstufe aufweist.

Eine derartige Bremsanlage ist zum Beispiel aus der internationalen Patentanmeldung WO 00/68053 bekannt. Der genannten Veröffentlichung sind jedoch keine Hinweise auf den Aufbau der elektronischen Steuer- und Regeleinheit, insbesondere auf Maßnahmen entnehmbar, die für die Verringerung der Ausfallwahrscheinlichkeit der Ansteuerung der verwendeten elektromagnetisch betätigbaren Ventile erforderlich sind.

Es ist daher Aufgabe der vorliegenden Erfindung, eine Vorrichtung zur Ansteuerung von elektromagnetisch betätigbaren Ventilen einer elektrohydraulischen Bremsanlage der eingangs genannten Gattung vorzuschlagen, die eine möglichst hohe Verfügbarkeit der elektronisch geregelten Systemfunktionen insbesondere hinsichtlich eines kurzen Bremsweges sowie einer ausreichenden Fahrzeugstabilität unabhängig davon gewährleistet, um welchen Fahrzeugtyp es sich handelt bzw. ob das Fahrzeug beladen oder unbeladen ist.

Diese Aufgabe wird erfindungsgemäß dadurch gelöst, daß die Steuer- und Regeleinheit zwei zusätzliche Ventiltreiberstufen aufweist, denen eine erste sowie eine zweite Gruppe von Ventilen zugeordnet ist und die diese Gruppe zusätzlich von der Versorgungsspannung oder Masse abtrennen, um so das Abschalten der ersten bzw. der zweiten Gruppe auch im Fehlerfall sicherzustellen.

Zur Konkretisierung des Erfindungsgedankens ist vorgesehen, daß die erste Ventiltreiberstufe für die Trennventile sowie die Druckregelventile vorgesehen ist, die jeweils einer Bremse einer ersten bzw. einer zweiten Fahrzeugachse zugeordnet sind, während die zweite Ventiltreiberstufe für die Druckausgleichsventile sowie die Druckregelventile vorgesehen ist, die den anderen zwei Radbremsen der ersten bzw. der zweiten Fahrzeugachse zugeordnet sind. Die erwähnte Variante ermöglicht eine elektronische Bremsdruckregelung aller vier Fahrzeugräder.

Eine sinnvolle Weiterbildung des Erfindungsgedankens besteht darin, daß die erste Ventiltreiberstufe für das Trennventil einer ersten Fahrzeugachse, das Druckausgleichsventil einer zweiten Fahrzeugachse sowie die Druckregelventile vorgesehen ist, die jeweils einer Bremse der ersten bzw. der zweiten Fahrzeugachse zugeordnet sind, während die zweite Ventiltreiberstufe für das Trennventil der zweiten Fahrzeugachse, das Druckausgleichsventil der ersten Fahrzeugachse sowie die Druckregelventile vorgesehen ist, die den anderen zwei Bremsen der ersten bzw. der zweiten Fahrzeugachse zugeordnet sind. Diese Variante ermöglicht eine elektronische Bremsdruckregelung von drei Rädern, während der Bremsdruck für die dem vierten Rad zugeordnete Radbremse vom Hauptbremszylinder bereitgestellt wird.

Schließlich sieht eine dritte Variante des Erfindungsgegenstandes vor, daß die erste Ventiltreiberstufe für das Trennventil und das Druckausgleichsventil sowie die Druckregelventile einer ersten Fahrzeugachse zugeordneten Radbremsen vorgesehen ist, während die zweite Ventiltreiberstufe für das Trennventil und das Druckausgleichsventil sowie die Druckregelventile einer zweiten Fahrzeugachse zugeordneten Radbremsen vorgesehen ist. Durch diese Zuordnung wird eine elektronische Bremsdruckregelung zweier Räder ermöglicht, während die Radbremsen der anderen Räder mit dem vom Fahrer im Hauptbremszylinder eingesteuerten Druck beaufschlagt werden.

Die Erfindung wird in der nachfolgenden Beschreibung an drei Ausführungsbeispielen unter Bezugnahme auf die beiliegende Zeichnung näher erläutert. In der Zeichnung zeigen:
- Fig. 1: ein vereinfachtes Schaltbild einer Ausführung der erfindungsgemäßen elektrohydraulischen Bremsanlage,
- Fig. 2: eine zweite Alternative der Ansteuerung der elektromagnetischen Ventile bei einer elektrohydraulischen Bremsanlage gemäß Fig.1, und
- Fig. 3: eine dritte Alternative der Ansteuerung der elektromagnetischen Ventile bei einer elektrohydraulischen Bremsanlage gemäß Fig.1.

Die in der Zeichnung dargestellte, elektrohydraulische Bremsanlage besteht im wesentlichen aus einem mittels eines Betätigungspedals 1 betätigbaren, zweikreisigen Hauptbremszylinder bzw. Tandemhauptzylinder 2, der mit einem Pedalwegsimulator 3 zusammenwirkt sowie zwei voneinander getrennte Druckräume aufweist, die mit einem drucklosen Druckmittelvorratsbehälter 4 in Verbindung stehen. An den ersten Druckraum (Primärdruckraum) sind mittels einer absperrbaren ersten hydraulischen Leitung 5 beispielsweise der Hinterachse zugeordnete Badbremsen 7,8 angeschlossen, wobei die Radbremse 7 dem Hinterrad links und die Radbremse 8 dem Hinterrad rechts zugeordnet ist. Das Absperren der Leitung 5 erfolgt mittels eines ersten Trennventils 11, während in einem zwischen den Radbremsen 7, 8 geschalteten Leitungsabschnitt 12 ein elektromagnetisch betätigbares, vorzugsweise stromlos offenes (S0) Druckausgleichsventil 13 eingefügt ist, das bei Bedarf eine radindividuelle Bremsdruckregelung ermöglicht.

Der zweite Druckraum des Hauptbremszylinders 2, an den ein Drucksensor 15 angeschlossen sein kann, ist über eine mittels eines zweiten Trennventils 14 absperrbare zweite hydraulische Leitung 6 mit dem anderen, der Vorderachse zugeordneten Radbremsenpaar 9, 10 verbindbar, wobei die Radbremse 9 dem Vorderrad links und die Radbremse 10 dem Vorderrad rechts zugeordnet ist. In einem zwischen den Radbremsen 9, 10 geschalteten Leitungsabschnitt 16 ist wieder ein elektromagnetisch betätigbares, vorzugsweise stromlos offenes (S0) Druckausgleichsventil 19 eingefügt. Da der Aufbau des an den zweiten Druckraum des Hauptbremszylinders 2 angeschlossenen hydraulischen Kreises identisch dem des in der vorstehenden Beschreibung erläuterten Bremskreises 11 entspricht, braucht er im nachfolgenden Text nicht mehr erörtert zu werden.

Als die vorhin erwähnte Hilfsdruckquelle dient ein Hochdruckspeicher 21, der von einem Motor-Pumpen-Aggregat 20 mit unter hohem Druck stehenden Druckmittel gefüllt wird. Das Motor-Pumpen-Aggregat 20 besteht aus einer mittels eines Elektromotors 22 angetriebenen Pumpe 23 sowie einem der Pumpe 23 parallel geschalteten Druckbegrenzungsventil 24. Die Saugseite der Pumpe 23 ist über ein Rückschlagventil an den vorhin erwähnten Druckmittelvorratsbehälter 4 angeschlossen. Der von der Pumpe 23 aufgebrachte hydraulische Fülldruck des Hochdruckspeichers 21 wird von einem Drucksensor 25 überwacht.

Wie der Zeichnung weiter zu entnehmen ist, sind den Radbremsen 7, 8 der Fahrzeughinterachse zwei elektromagnetisch analog ansteuerbare, stromlos geschlossene 2/2-Wegeventile 17, 18 zugeordnet, die die Funktion von für elektrohydraulisch geregelte Bremsvorgänge erforderlichen Einlaßventilen erfüllen und deren Eingangsanschlüsse an den vorhin erwähnten Hochdruckspeicher 21 angeschlossen sind. Außerdem sind die Radbremsen 7, 8 über je ein elektromagnetisch analog ansteuerbares, stromlos geschlossenes 2/2-Wegeventil bzw. Auslaßventil 27, 28 an eine dritte hydraulische Leitung 39 angeschlossen, die andererseits mit dem drucklosen Druckmittelvorratsbehälter 4 in Verbindung steht. Der in den Radbremsen 7, 8 herrschende hydraulische Druck wird mit Hilfe je eines Drucksensors 30, 31 ermittelt. Ähnlich wirken die der Fahrzeugvorderachse zugeordneten Radbremsen 9, 10 mit Ventilpaaren 34, 37 bzw. 35, 38 zusammen, wobei die Druckregelventile 34, 35 die Funktion der Einlaßventile und die Druckregelventile 37, 38 die Funktion der Auslaßventile erfüllen.

Der gemeinsamen Ansteuerung des Motor-Pumpen-Aggregats 20 sowie der Elektromagnetventile 11,13,14,17,18,19,27,28,34, 35,37,38 dient eine elektronische Steuereinheit 26, der als Eingangssignale die Ausgangssignale eines mit dem Betätigungspedal 1 zusammenwirkenden, vorzugsweise redundant ausgeführten Betätigungswegsensors 36 sowie des vorhin erwähnten Drucksensors 15 zugeführt werden und die eine Fahrerverzögerungswunscherkennung ermöglichen. Zur Fahrerverzögerungswunscherkennung können jedoch auch andere Mittel, beispielsweise ein die Betätigungskraft am Betätigungspedal 1 sensierender Kraftsensor verwendet werden. Als weitere Eingangsgrößen werden der elektronischen Steuereinheit 26 die Ausgangssignale der Drucksensoren 25, 30, 31 sowie die der Geschwindigkeit des Fahrzeuges entsprechenden Ausgangssignale von nicht dargestellten Radsensoren zugeführt.

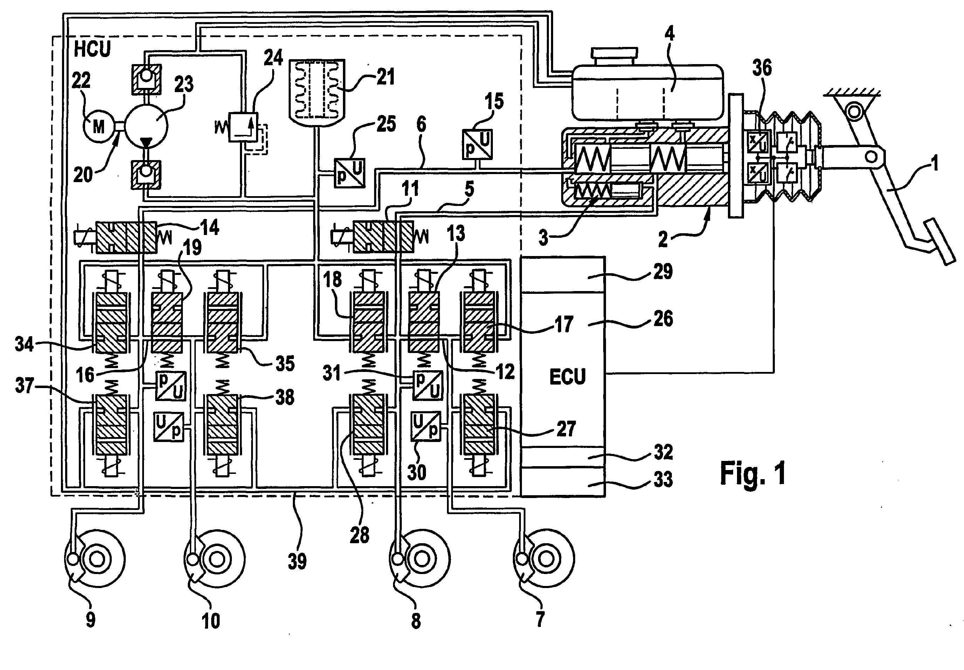

Wie in Fig. 1 lediglich schematisch angedeutet ist, umfaßt die elektronische Steuereinheit 26 u. a. eine Ventiltreiberstufe 29 sowie zwei zusätzliche Ventiltreiberstufen 32, 33, deren Aufgabe im nachfolgenden Text erläutert wird.

Um eine möglichst hohe Verfügbarkeit der elektronisch geregelten Systemfunktion der dargestellten elektrohydraulischen Bremsanlage zu gewährleisten werden die vorhin erwähnten elektromagnetisch betätigbaren Ventile in zwei Gruppen unterteilt und den beiden zusätzlichen Ventiltreiberstufen 32, 33 zugeordnet. So wird die der ersten zusätzlichen Ventiltreiberstufe 32 zugeordnete Gruppe durch die beiden Trennventile 11, 14, die Druckregelventile 34, 37 der dem linken Vorderrad zugeordneten Radbremse 9 sowie die Druckregelventile 18, 28 der dem rechten Hinterrad zugeordneten Radbremse 8 gebildet. Die der zweiten zusätzlichen Ventiltreiberstufe 33 zugeordnete Gruppe besteht dagegen aus den beiden Druckausgleichsventilen 13, 19, den Druckregelventile 35, 38 der dem rechten Vorderrad zugeordneten Radbremse 10 sowie den Druckregelventile 17, 27 der dem linken Hinterrad zugeordneten Radbremse 7.

Bei einem Ausfall der ersten zusätzlichen Ventiltreiberstufe 32 oder eines der Treiber der zugeordneten Ventilgruppe, nach dem die Druckausgleichsventile 13, 19 geschlossen werden müssen, können die Bremsdrücke in der dem rechten Vorderrad zugeordneten Radbremse 10 sowie der dem linken Hinterrad zugeordneten Radbremse 7 noch elektronisch geregelt werden. Die Bremsdrücke in der dem linken Vorderrad zugeordneten Radbremse 9 sowie der dem rechten Hinterrad zugeordneten Radbremse 8 können durch einen hydraulischen Durchgriff vom Fahrer durch seine auf den Hauptbremszylinder 2 einwirkende Betätigungs- bzw. Fußkraft erzeugt werden.

Bei einem Ausfall der zweiten zusätzlichen Ventiltreiberstufe 33 oder eines der Treiber der zugeordneten Ventilgruppe, können die beiden Trennventile 11, 14 geschlossen werden. Da beide Druckausgleichsventile 13, 19 offen bleiben, können die Bremsdrücke in allen vier Radbremsen 7 - 10 elektronisch geregelt werden, indem die Vorderachse über das Ventilpaar 34, 37 und die Hinterachse über das Ventilpaar 18, 28 geregelt wird.

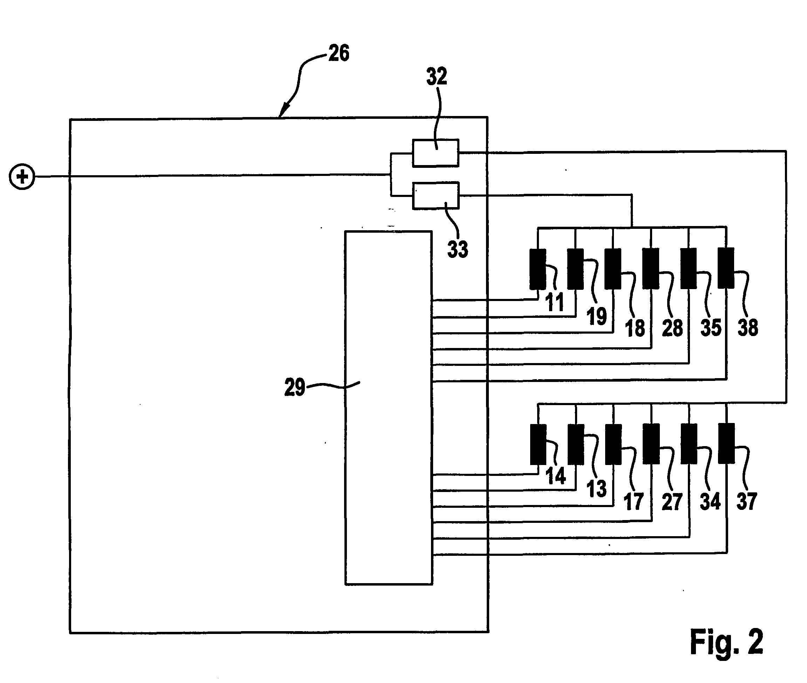

Bei dem in Fig. 2 stark vereinfacht dargestellten zweiten Beispiel wird die der ersten zusätzlichen Ventiltreiberstufe 32 zugeordnete Gruppe durch das der Fahrzeugvorderachse zugeordnete Trennventil 14, die Druckregelventile 34, 37 der dem linken Vorderrad zugeordneten Radbremse 9, das der Fahrzeughinterachse zugeordnete Druckausgleichsventil 13 sowie die Druckregelventile 17, 27 der dem linken Hinterrad zugeordneten Radbremse 7 gebildet. Die der zweiten zusätzlichen Ventiltreiberstufe 33 zugeordnete Gruppe besteht dagegen aus dem der Fahrzeughinterachse zugeordnete Trennventil 11, den Druckregelventilen 18, 28 der dem rechten Hinterrad zugeordneten Radbremse 8, dem der Fahrzeugvorderachse zugeordneten Druckausgleichsventil 19 sowie den Druckregelventilen 35, 38 der dem rechten Vorderrad zugeordneten Radbremse 10.

Bei einem Ausfall der ersten zusätzlichen Ventiltreiberstufe 32 oder eines der Treiber der zugeordneten Ventilgruppe, nach dem das der Fahrzeugvorderachse zugeordnete Druckausgleichsventil 19 sowie das der Fahrzeughinterachse zugeordnete Trennventil 11 geschlossen werden müssen, können die Bremsdrücke in der dem rechten Vorderrad zugeordneten Radbremse 10 sowie in den der Fahrzeughinterachse zugeordneten Radbremsen 7, 8 elektronisch geregelt werden. Der Bremsdruck in der dem linken Vorderrad zugeordneten Radbremse 9 kann durch einen hydraulischen Durchgriff vom Fahrer durch seine auf den Hauptbremszylinder 2 einwirkende Betätigungs- bzw. Fußkraft erzeugt werden.

Bei einem Ausfall der zweiten zusätzlichen Ventiltreiberstufe 33 oder eines der Treiber der zugeordneten Ventilgruppe, nach dem das der Fahrzeughinterachse zugeordnete Druckausgleichsventil 13 sowie das der Fahrzeugvorderachse zugeordnete Trennventil 14 geschlossen werden müssen, können die Bremsdrücke in der dem linken Hinterrad zugeordneten Radbremse 7 sowie in den der Fahrzeugvorderachse zugeordneten Radbremsen 9, 10 elektronisch geregelt werden. Der Bremsdruck in der dem rechten Hinterrad zugeordneten Radbremse 8 kann durch einen hydraulischen Durchgriff vom Fahrer durch seine auf den Hauptbremszylinder 2 einwirkende Betätigungs- bzw. Fußkraft erzeugt werden.

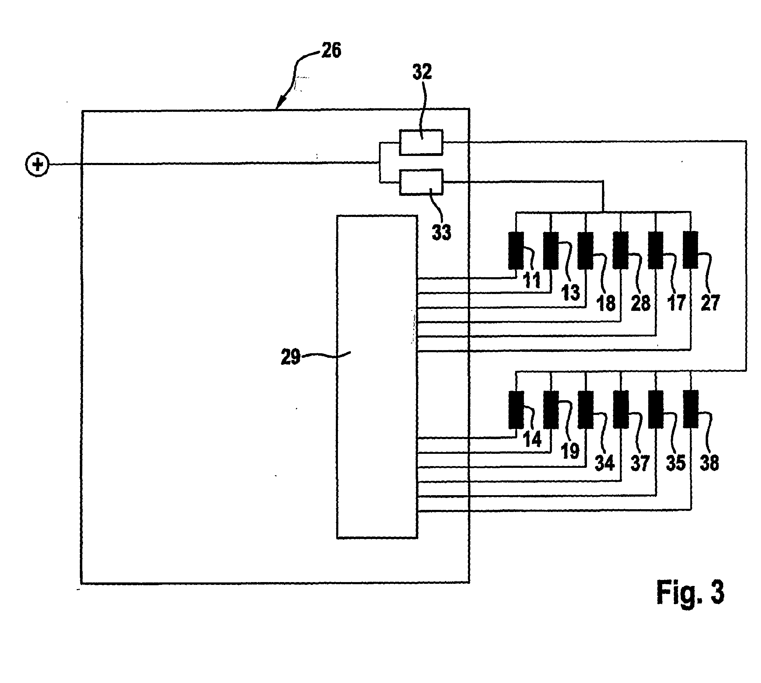

Bei dem in Fig. 3 stark vereinfacht dargestellten dritten Beispiel wird schließlich die der ersten zusätzlichen Ventiltreiberstufe 32 zugeordnete Gruppe durch das der Fahrzeugvorderachse zugeordnete Trennventil 14, das der Fahrzeugvorderachse zugeordnete Druckausgleichsventil 19 sowie die den Radbremsen 9, 10 der Fahrzeugvorderachse zugeordneten Druckregelventile 34, 37, 35, 38 gebildet. Die der zweiten zusätzlichen Ventiltreiberstufe 33 zugeordnete Gruppe besteht dagegen aus dem der Fahrzeughinterachse zugeordnete Trennventil 11, das der Fahrzeughinterachse zugeordnete Druckausgleichsventil 13 sowie die den Radbremsen 7, 8 der Fahrzeughinterachse zugeordneten Druckregelventile 17, 27, 18, 28 gebildet.

Bei einem Ausfall der ersten zusätzlichen Ventiltreiberstufe 32 oder eines der Treiber der zugeordneten Ventilgruppe können die Bremsdrücke in den der Fahrzeughinterachse zugeordneten Radbremsen 7, 8 uneingeschränkt elektronisch geregelt werden. Der Bremsdruck in den der Fahrzeugvorderachse zugeordneten Radbremsen 9, 10 kann durch einen hydraulischen Durchgriff vom Fahrer durch seine auf den Hauptbremszylinder 2 einwirkende Betätigungs- bzw. Fußkraft erzeugt werden.

Bei einem Ausfall der zweiten zusätzlichen Ventiltreiberstufe 33 oder eines der Treiber der zugeordneten Ventilgruppe können die Bremsdrücke in den der Fahrzeugvorderachse zugeordneten Radbremsen 9, 10 uneingeschränkt elektronisch geregelt werden. Der Bremsdruck in den der Fahrzeughinterachse zugeordneten Radbremsen 7, 8 kann durch einen hydraulischen Durchgriff vom Fahrer durch seine auf den Hauptbremszylinder 2 einwirkende Betätigungs- bzw. Fußkraft erzeugt werden.

Wie insbesondere den Fig. 2 und 3 zu entnehmen ist, werden die zusätzlichen Ventiltreiberstufen 32, 33 jeweils zwischen der entsprechenden Ventilgruppe und dem Pluspol einer lediglich schematisch angedeuteten Fahrzeugbatterie geschaltet. Es ist jedoch auch denkbar, die zusätzlichen Ventiltreiberstufen 32, 33 jeweils zwischen die entsprechende Ventilgruppe und die Fahrzeugmasse zu schalten.

## Patentansprüche

1. Vorrichtung zur Ansteuerung von elektromagnetisch betatigbaren Ventilen (11,13,14,17,18,19,27,28,34,35,37,38) einer elektrohydraulischen Bremsanlage für Kraftfahrzeuge, die in einer Betriebsart "Brake-by-wire" sowohl vom Fahrzeugführer als auch unabhängig vom Fahrzeugführer ansteuerbar ist und die in einer Rückfallbetriebsart betrieben werden kann, in der nur der Betrieb durch den Fahrzeugführer möglich ist,
mit einer Einrichtung (15) zur Erkennung des Fahrerverzögerungswunsches,
einem mittels eines Bremspedals (1) betätigbaren, mindestens einen Druckraum aufweisenden Notdruckgeber bzw. Hauptbremszylinder (2), dem ein druckloser Druckmittelvorratsbehälter (4) zugeordnet ist,
einer hydraulischen Hilfsdruckquelle (20,21), mit deren Druck Rad-bremsen (7,8,9,10) beaufschlagbar sind, die über mindestens eine mittels eines elektromagnetisch betätigbaren Trennventils (11,14) absperrbare hydraulische Verbindung (5,6) mit dem Hauptbremszylinder (2) verbindbar sind, und denen elektromagnetisch betätigbare Druckregelventile (17,18,34,35,27,28,37,39) zugeordnet sind, die die Radbremsen in einer Druckaufbauphase mit der Druckquelle (21) verbinden, in einer Druckhaltephase geschlossen sind bzw. geschlossen werden und in einer Druckabbauphase die Radbremsen mit dem Druckmittelvorratsbehälter (4) verbinden,
elektromagnetisch betätigbaren Druckausgleichsventilen (13,19), die einen Druckausgleich zwischen den Radbremsen einer Fahrzeugachse ermöglichen,
sowie
einer elektronischen Steurer- und Regeleinheit (26) zur Ansteuerung der Hilfsdruckquelle (20,21), des mindestens einen Trennventils, der Druckregelventile sowie der Druckausgleichsventile, die eine Ventiltreiberstufe (29) aufweist, **dadurch gekennzeichnet, daß** die Steuer- und Regeleinheit (26) zwei zusätzliche Ventiltreiberstufen (32,33) aufweist, denen eine erste sowie eine zweite Gruppe von Ventilen (11,13,14,17,18, 27,28,34,35,37,38) zugeordnet ist und die im Fehlerfall dem Abschalten der ersten bzw. der zweiten Gruppe dienen.

2. Vorrichtung nach Anspruch 1 **dadurch gekennzeichnet, daß** die erste Ventiltreiberstufe (32) für die Trennventile (11,14) sowie die Druckregelventile (34,37 bzw.18,28) vorgesehen ist, die jeweils einer Bremse (9 bzw. 8) einer ersten bzw. einer zweiten Fahrzeugachse zugeordnet sind, während die zweite Ventiltreiberstufe (33) für die Druckausgleichsventile (13,19) sowie die Druckregelventile (35,38 bzw.17,27) vorgesehen ist, die den anderen zwei Radbremsen (10 bzw.7) der ersten bzw. der zweiten Fahrzeugachse zugeordnet sind.

3. Vorrichtung nach Anspruch 1 **dadurch gekennzeichnet, daß** die erste Ventiltreiberstufe für das Trennventil (14) einer ersten Fahrzeugachse, das Druckausgleichsventil (13) einer zweiten Fahrzeugachse sowie die Druckregelventile (34,37 bzw. 17,27) vorgesehen ist, die jeweils einer Bremse (9 bzw. 7) der ersten bzw. der zweiten Fahrzeugachse zugeordnet sind, während die zweite Ventiltreiberstufe für das Trennventil (11) der zweiten Fahrzeugachse, das Druckausgleichsventil (19) der ersten Fahreugachse sowie die Druckregelventile (35,38 bzw. 18,28) vorgesehen ist, die den anderen zwei Bremsen (10 bzw. 7) der ersten bzw. der zweiten Fahrzeugachse zugeordnet sind.

4. Vorrichtung nach Anspruch 1 **dadurch gekennzeichnet, daß** die erste Ventiltreiberstufe für das Trennventil (14) und das Druckausgleichsventil (19) sowie die Druckregelventile (34,37 bzw. 35,38) einer ersten Fahrzeugachse zugeordneten Radbremsen (9,10) vorgesehen ist, während die zweite Ventiltreiberstufe für das Trennventil (11) und das Druckausgleichsventil (13) sowie die Druckregelventile (17,27 bzw. 18,28) einer zweiten Fahrzeugachse zugeordneten Radbremsen (7,8) vorgesehen ist.

## Claims

1. Device for controlling electromagnetically operable valves (11, 13, 14, 17, 18, 19, 27, 28, 34, 35, 37, 38) of an electrohydraulic brake system for motor vehicles, which device is controllable in a 'brake-by-wire' operating mode by the vehicle operator as well as irrespective of the vehicle operator, and which can be operated in a fallback operating mode allowing operation by the vehicle operator only, including
a device (15) for detecting a driver's request for deceleration,
an emergency pressure generator or master brake cylinder (2) operable by means of a brake pedal (1) and including at least one pressure chamber, associated with which generator is a non-pressurized pressure fluid supply reservoir (4),
a hydraulic auxiliary pressure source (20, 21) whose pressure can be applied to wheel brakes (7, 8, 9, 10) that are connectable to the master brake cylinder (2) by way of at least one hydraulic connection (5, 6) closable by means of an electromagnetically operable separating valve (11, 14), and associated with which are electromagnetically operable pressure control valves (17, 18, 34, 35, 27, 28, 37, 39) which connect the wheel brakes to the pressure source (21) in a pressure increase phase, which are or become closed in a pressure maintaining phase and connect the wheel brakes to the pressure fluid supply reservoir (4) in a pressure reduction phase,
electromagnetically operable pressure-compensating valves (13, 19) that permit pressure compensation between the wheel brakes of a vehicle axle,
as well as
an electronic control and regulation unit (26) for actuating the auxiliary pressure source (20, 21), the at least one separating valve, the pressure control valves and the pressure-compensating valves, said unit including a valve driver stage (29),
**characterized in that** the control and regulation unit (26) includes two additional valve driver stages (32, 33) associated with which is a first and a second group of valves (11,13,14,17,18,27,28,34,35,37,38), the said driver stages being used to disable the first or the second group, respectively, when malfunction occurs.

2. Device as claimed in claim 1,
**characterized in that** the first valve driver stage (32) is meant for the separating valves (11, 14) and for the pressure control valves (34, 37 or 18, 28) being respectively associated with a brake (9 or 8) of a first or a second vehicle axle, while the second valve driver stage (33) is provided for the pressure-compensating valves (13, 19) and the pressure control valves (35, 38 or 17, 27) being associated with the other two wheel brakes (10 or 7) of the first or the second vehicle axle.

3. Device as claimed in claim 1,
**characterized in that** the first valve driver stage is provided for the separating valve (14) of a first vehicle axle, the pressure-compensating valve (13) of a second vehicle axle and the pressure control valves (34, 37 or 17, 27) being associated with respectively one brake (9 or 7) of the first or the second vehicle axle, while the second valve driver stage is provided for the separating valve (11) of the second vehicle axle, the pressure-compensating valve (19) of the first vehicle axle and the pressure control valves (35, 38 or 18, 28) being associated with the other two brakes (10 or 7) of the first or the second vehicle axle.

4. Device as claimed in claim 1,
**characterized in that** the first valve driver stage is provided for the separating valve (14) and the pressure-compensating valve (19) as well as the pressure control valves (34, 37 or 35, 38) of wheel brakes (9, 10) being associated with a first vehicle axle, while the second valve driver stage is provided for the separating valve (11) and the pressure-compensating valve (13) as well as the pressure control valves (17, 27 or 18, 28) of wheel brakes (7, 8) being associated with a second vehicle axle.

## Revendications

1. Ensemble à actionner des soupapes (11, 13, 14, 17, 18, 19, 27, 28, 34, 35, 37, 38) opérables de manière électromagnétique d'un système de freinage d'automobile, actionnable dans une mode d'opération de « brake-by-wire » non seulement par le conducteur mais encore de manière indépendante du conducteur et opérable dans une mode d'opération à renoyer dans laquelle l'opération est seulement possible par le conducteur,
comportant un mécanisme (15) à reconnaître le désir du conducteur à décélérer la vitesse,
un capteur de pression de secours respectivement maître-cylindre de frein (2) opérable d'une pédale de frein (1) et prévu au moins d'un réservoir à pression associé auquel (capteur) est un réservoir (4) de fluide non comprimé,
une source de pression auxiliaire (20, 21) hydraulique, alimentant sa pression aux freins de roue (7, 8, 9, 10) qui sont reliable par l'intermédiaire au moins d'un raccordement (5, 6) hydraulique bloqué par une soupape séparatrice (11,14) opérable de manière électromagnétique au maître-cylindre de frein (2) et auxquels sont associés des soupapes régulatrices de pression (17, 18, 34, 35, 27, 28, 37, 39) opérable de manière électromagnétique qui raccordent les freins de roue, dans une phase d'accroissement de pression, à la source de pression (21), dans une phase de retenue de pression sont ou seront fermés et dans une phase de perte de pression raccordent les freins de roue au réservoir de fluide (4),
des soupapes régulatrices de pression (13,19) opérable de manière électromagnétique et permettant une compensation de pression entre les freins de roue d'un essieu d'automobile, et
un ensemble de contrôle et commande (26) électronique à actionner la source de pression auxiliaire (20, 21) de la au moins une soupape séparatrice, des soupapes régulatrices de pression et des soupapes de compensation de pression, comportant un valve driver (29),
**caractérisé en ce que** l'ensemble de contrôle et commande (26) comporte deux valve drivers (32, 33) additionnels associé auxquels est un premier et un seconde groupe de soupapes (11, 13, 14, 17, 18, 27, 28, 34, 35, 37, 38) servant en cas d'erreur à débrayer le premier respectivement le seconde groupe.

2. L'ensemble selon la revendication 1,
**caractérisé en ce que** le premier valve driver (32) est pourvu pour les soupapes séparatrices (11, 14) ainsi que pour les soupapes régulatrices de pression (34, 37 respectivement 18, 28) associé à chacun d'un frein (9 respectivement 8) d'un essieu d'automobile premier respectivement d'un seconde essieu d'automobile tandis que le seconde valve driver (33) est pourvu pour les soupapes de compensation (13, 19) et les soupapes régulatrices de pression (35, 38 respectivement 17, 27) associées aux deux autres freins de roue (10 respectivement 7) de l'essieu d'automobile premier respectivement secondaire.

3. L'ensemble selon la revendication 1,
**caractérisé en ce que** le premier valve driver est pourvu pour la soupape séparatrice (14) d'un essieu d'automobile premier, la soupape de compensation de pression (13) d' essieu secondaire d'automobile et les soupapes régulatrices (34, 37 respectivement 17, 27) associées à chacun des freins (9 respectivement 7) du premier respectivement seconde essieu d'automobile, tandis que le seconde valve driver est pourvu pour la soupape régulatrice (11) de l'essieu secondaire, la soupape de compensation de pression (19) de l'essieu d'automobile premier et les soupapes régulatrices (35, 38 respectivement 18, 28) associées aux autres deux freins (10 respectivement 7) de l'essieu d'automobile premier respectivement secondaire.

4. L'ensemble selon la revendication 1,
**caractérisé en ce que** le premier valve driver est pourvu pour la soupape séparatrice (14) et la soupape de compensation de pression (19) et les soupapes régulatrices de pression (34, 37 respectivement 35, 38) des freins de roue 9, 10) associés à un premier essieu d'automobile, tandis que le valve driver secondaire est pourvu pour la soupape séparatrice (11) et la soupape de compensation de pression (13) et les soupapes régulatrices de pression (17, 27 respectivement 18, 28) des freins de roue (7,8) associés à un seconde essieu d'automobile.
